(19) Europäisches Patentamt
European Patent Office
Office européen des brevets

(11) **EP 2 369 780 B1**

(12) **FASCICULE DE BREVET EUROPEEN**

(45) Date de publication et mention
de la délivrance du brevet:
**12.09.2018 Bulletin 2018/37**

(51) Int Cl.:
*H04L 9/32* *(2006.01)*    *H04W 12/06* *(2009.01)*
*H04L 29/06* *(2006.01)*    *G06Q 20/20* *(2012.01)*

(21) Numéro de dépôt: **11154250.2**

(22) Date de dépôt: **11.02.2011**

(54) **Procédé et système de validation d'une transaction, terminal transactionnel et programme correspondants.**

VERFAHREN UND SYSTEM ZUR VALIDIERUNG EINER TRANSAKTION, UND ENTSPRECHENDES TRANSAKTIOSTERMINAL UND PROGRAMM

METHOD AND SYSTEM FOR VALIDATING A TRANSACTION, AND CORRESPONDING TRANSACTIONAL TERMINAL AND PROGRAMME

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.03.2010 FR 1052095**

(43) Date de publication de la demande:
**28.09.2011 Bulletin 2011/39**

(73) Titulaire: **Ingenico Group**
**75015 Paris (FR)**

(72) Inventeurs:
• **Naccache, David**
**78018 Paris (FR)**
• **Brier, Eric**
**26000 Valence (FR)**

(74) Mandataire: **Vidon Brevets & Stratégie**
**16B, rue de Jouanet**
**BP 90333**
**35703 Rennes Cedex 7 (FR)**

(56) Documents cités:
EP-A1- 1 696 626    WO-A1-2007/024170
US-A1- 2004 190 718    US-A1- 2007 184 817

**Description**

**1. Domaine de l'invention**

Le domaine de l'invention est celui de la validation de transactions effectuées par un utilisateur sur un terminal transactionnel.

Plus précisément, l'invention concerne les systèmes de validation permettant aux utilisateurs d'effectuer une action prédéterminée, comme par exemple réaliser un paiement, de façon rapide et pratique.

**2. Art antérieur**

Un système connu, tel que le système décrit dans la demande de brevet EP 1696 626 A1, et très utilisé de validation de transactions consiste à associer à un utilisateur un code secret et personnel, dont il se sert lorsqu'il doit par exemple accéder à un lieu ou valider une transaction via un terminal de paiement électronique.

Un inconvénient de ce système réside dans le fait que ce code secret peut être subtilisé à l'utilisateur, permettant ainsi à un fraudeur d'usurper l'identité d'un utilisateur pour agir à sa place. Un autre inconvénient réside dans le fait que l'utilisateur soit se souvenir de son code pour valider une transaction.

Il existe par ailleurs des systèmes d'authentification d'un utilisateur, parmi lesquels la biométrie, couramment utilisée afin d'identifier et/ou authentifier des utilisateurs sur la base de caractéristiques physiques individuelles et permettant de sécuriser la validation de transactions.

Cependant, un inconvénient de ces systèmes d'authentification biométrique de l'art antérieur réside dans leur lenteur quand ils sont utilisés pour référencer un grand nombre d'utilisateurs (par exemple pour contrôler l'accès au métro dans une grande agglomération ou authentifier un utilisateur d'une carte bancaire).

En effet, la durée de l'étape de vérification, pendant laquelle la décision d'authentification proprement dite est prise, dépend du nombre d'utilisateurs référencés dans le système d'authentification. Plus le nombre d'utilisateurs référencés est important, et plus le nombre de comparaisons potentielles à effectuer pour déterminer ou non l'authentification d'un utilisateur est important.

Il existe donc un besoin d'une technique qui permette de pallier ces inconvénients des systèmes connus de validation de transactions.

L'invention s'applique tout particulièrement à des dispositifs mobiles tels que les téléphones mobiles, les GPS portables, les assistants numériques personnels (dits PDAs), les ordinateurs portables et tous autres appareils, notés par la suite « dispositif mobile », ayant vocation à communiquer via un réseau de télécommunication mobile, à disposer ou être la source d'une information de localisation précise ou approximative et à être généralement à portée de main de leurs propriétaires.

L'invention s'applique également, dans au moins un mode de réalisation, à des dispositifs de vérification de transactions, notés « terminal transactionnel » par la suite, tels que les terminaux de paiement et de vérification d'identité, les serrures électroniques, les caisses enregistreuses et les bornes de contrôle d'accès ou les bornes de transports en commun. Ces dispositifs ont vocation à communiquer via un réseau de télécommunication et à avoir une localisation géographique précise ou approximative connue de leurs gestionnaires.

**3. Objectifs de l'invention**

L'invention a notamment pour objectif de pallier ces inconvénients de l'art antérieur.

Plus précisément, un objectif de l'invention, dans au moins un de ses modes de réalisation, est de fournir une technique de validation d'une transaction associée à un utilisateur qui soit rapide et fiable, dans le cas d'un système référençant un très grand nombre d'utilisateurs, pour permettre à l'utilisateur de réaliser une action comme un paiement.

L'invention a ainsi pour objectif de fournir une telle technique qui soit également ergonomique pour l'utilisateur.

Un autre objectif de l'invention est de fournir une telle technique qui soit peu coûteuse et facile à mettre en oeuvre.

**4. Exposé de l'invention**

L'invention propose une solution nouvelle qui ne présente pas l'ensemble de ces inconvénients de l'art antérieur, sous la forme d'un procédé de validation d'une transaction sur un terminal transactionnel, la transaction étant associée à un utilisateur.

Selon l'invention, un tel procédé comprend une étape de décodage d'un code de validation préalablement généré et affiché par le terminal transactionnel, saisi par l'utilisateur au sein d'un message de validation, transmis par un dispositif mobile de l'utilisateur à une entité d'un réseau de télécommunication auquel le dispositif mobile et le terminal transactionnel sont connectés, ladite étape de décodage dudit code de validation délivrant au moins une information représentative d'un identifiant dudit terminal transactionnel, ledit identifiant dudit terminal transactionnel correspondant au résultat d'une fonction $f(x,y)$ permettant d'associer un identifiant unique à un terminal transactionnel en fonction de sa localisation $(x,y)$.

Ainsi, l'invention repose sur une approche nouvelle et inventive de la validation d'une transaction, associée à un utilisateur, sur un terminal transactionnel, utilisant un dispositif mobile de l'utilisateur (par exemple son téléphone mobile) pour émettre un message de validation, comprenant un code de validation généré par le terminal transactionnel. Ainsi, l'utilisateur intervient dans la validation de la transaction, en lisant un code affiché par le terminal transactionnel et en le recopiant dans un message de validation sur son téléphone mobile. L'utilisateur transmet ensuite ce message de validation, via son téléphone mobile, à une entité d'un réseau de télécommunication auquel son téléphone mobile est connecté, et auquel le terminal transactionnel est lui aussi connecté.

Ce réseau de télécommunication peut comprendre d'une part un réseau mobile, auquel est connecté le téléphone mobile de l'utilisateur, et le cas échéant le terminal transactionnel, lorsque celui-ci est de type mobile (par exemple équipé d'une carte SIM), et un réseau filaire auquel est connecté le terminal transactionnel s'il n'est pas de type mobile.

Selon une caractéristique particulière de l'invention, le procédé comprend les étapes de :

- réception d'un code de validation préalablement généré et affiché par le terminal transactionnel, saisi par l'utilisateur au sein d'un message de validation transmis par un dispositif mobile de l'utilisateur à une entité d'un réseau de télécommunication auquel le dispositif mobile et le terminal transactionnel sont connectés ;
- identification d'une station de base d'un réseau de télécommunication mobile à laquelle est connecté le dispositif mobile de l'utilisateur ;
- décodage du code de validation délivrant au moins une information représentative d'un identifiant du terminal transactionnel ;
- validation de la transaction lorsque le terminal transactionnel identifié se trouve dans la zone de couverture de la station de base identifiée à laquelle est connecté le dispositif mobile de l'utilisateur.

Ainsi, le procédé selon l'invention utilise la possibilité de localisation d'un dispositif mobile de l'utilisateur, par exemple un téléphone mobile, pour valider une transaction effectuée sur un terminal transactionnel et associée à l'utilisateur en question.

Le principe général de l'invention repose donc sur l'émission, par un dispositif mobile de l'utilisateur, d'un code de validation permettant à la fois de localiser l'utilisateur via son dispositif mobile, et d'identifier le terminal transactionnel sur lequel est effectuée la transaction. Ainsi, la transaction est validée lorsque l'on peut déterminer que l'utilisateur est bien localisé à proximité du terminal transactionnel en question.

Cette proximité est déterminée d'une part grâce à la localisation du dispositif mobile et d'autre part grâce à une information représentative du terminal transactionnel, contenue dans le code de validation, et à une information de localisation du terminal transactionnel, connue du système de validation.

Selon un premier mode de réalisation, le terminal transactionnel étant mobile et connecté à une station de base du réseau de télécommunication mobile, le système de validation peut identifier le terminal transactionnel localisé à proximité du dispositif mobile de l'utilisateur.

Selon un deuxième mode de réalisation, par exemple lorsque le terminal mobile est connecté à un réseau de télécommunication filaire, une information de localisation du terminal transactionnel est transmise au système de validation.

En particulier le message de validation est de type SMS ou MMS.

Ainsi, l'envoi du code de validation par l'utilisateur est rapide, dans la mesure où il a seulement un SMS à envoyer.

Préférentiellement, le code de validation est un code court et rapide à taper.

Selon un aspect particulier de l'invention, l'étape de décodage délivre en outre une information représentative de la transaction.

Ainsi, le code de validation permet également, lorsqu'il est décodé, d'identifier la transaction à valider, par exemple en fournissant un numéro d'ordre de transactions effectuées sur le terminal transactionnel.

Classiquement, le terminal transactionnel transmet des informations concernant les transactions effectuées et en cours, et notamment le montant associé à chaque transaction, elle-même identifiée par un numéro d'ordre.

De cette manière, le montant de la transaction, associé au numéro d'ordre, est facile à déterminer par le système de validation et peut être associé à l'utilisateur effectuant la transaction.

Par exemple, la fonction s'écrit de la manière suivante : $f(x,y) = a \times v + u$, avec :

- $a$ et $b$ deux entiers, tels que $b \geq a$, et $n = a \times b$, où $n$ représente le nombre de d'identifiants différents à affecter aux terminaux transactionnels ;
- $w = E[x/a] \bmod 2$ ;
- $u = x \bmod a$ ;
- $v = (y + w \times E[b/2]) \bmod b$, avec $E[.]$ la partie entière, et
- $d = \mathrm{Min}\left(b, \sqrt{a^2 + \dfrac{b^2}{4}}\right)$ la distance minimale entre deux terminaux transactionnels distincts.

Selon un mode de réalisation de l'invention, le procédé comprend en outre une étape de réception d'un code confidentiel, préalablement saisi par l'utilisateur sur le terminal transactionnel, et transmis par le terminal transactionnel concomitamment à la transmission du code de validation par le dispositif mobile de l'utilisateur.

Ainsi, la validation de la transaction est également soumise à la vérification d'un code confidentiel associé à l'utilisateur et saisi sur le terminal transactionnel au moment de la transaction.

De cette manière, une double vérification peut être mise en oeuvre pour valider une transaction, car il faut à la fois que l'utilisateur saisisse un code confidentiel unique qui lui est associé, et utilise son téléphone mobile pour valider une transaction.

Ainsi, si une personne malveillante a réussi à prendre connaissance du code confidentiel de l'utilisateur, mais ne possède pas son téléphone mobile, la transaction ne pourra pas être validée.

De même, si une personne malveillante a réussi à subtiliser le téléphone mobile de l'utilisateur, mais n'a pas connaissance de son code confidentiel, la transaction ne pourra pas être validée.

Selon un autre aspect de l'invention, le message de validation comprend un code confidentiel.

Ainsi, la validation de la transaction est également soumise à la saisie d'un code confidentiel dans le message de validation contenant le code de validation, renforçant ainsi la sécurité de la transaction.

Selon une variante de réalisation, le procédé comprend en outre une étape de sélection d'un opérateur téléphonique auprès duquel le dispositif mobile de l'utilisateur est enregistré.

Ainsi, la mise en oeuvre de l'invention n'est pas limitée à un seul opérateur téléphonique. Cette étape de saisie a lieu sur le terminal transactionnel, par exemple suite à plusieurs choix offerts par le terminal transactionnel.

Par exemple, le terminal transactionnel est un terminal de paiement mobile connecté au réseau de télécommunication.

En particulier, le terminal transactionnel est connecté à la station de base.

Selon une caractéristique particulière de l'invention, le procédé comprend en outre une étape de transmission par l'entité du réseau de télécommunication, au terminal transactionnel, du code de validation et l'étape de décodage du code de validation est mise en oeuvre au sein du terminal transactionnel.

L'invention concerne également un système de validation d'une transaction sur un terminal transactionnel, la transaction étant associée à un utilisateur.

Selon l'invention, le système comprend des moyens de décodage d'un code de validation préalablement généré et affiché par le terminal transactionnel, saisi par l'utilisateur au sein d'un message de validation transmis par un dispositif mobile de l'utilisateur à une entité d'un réseau de télécommunication auquel le dispositif mobile et le terminal transactionnel sont connectés, lesdits moyens de décodage dudit code de validation délivrant au moins une information représentative d'un identifiant dudit terminal transactionnel, ledit identifiant dudit terminal transactionnel correspondant au résultat d'une fonction $f(x,y)$ permettant d'associer un identifiant unique à un terminal transactionnel en fonction de sa localisation $(x,y)$.

L'invention concerne également un terminal transactionnel comprenant des moyens de génération d'un code de validation, à partir d'au moins une information représentative d'un identifiant du terminal transactionnel, et des moyens d'affichage du code de validation généré sur un dispositif d'affichage du terminal transactionnel, ledit identifiant dudit terminal transactionnel correspondant au résultat d'une fonction $f(x,y)$ permettant d'associer un identifiant unique à un terminal transactionnel en fonction de sa localisation $(x,y)$.

Un autre aspect de l'invention concerne un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé de validation d'une transaction tel que décrit précédemment.

## 5. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 présente le contexte de mise en oeuvre du procédé de validation d'une transaction selon l'invention ;
- les figures 2 et 3 illustrent les principales étapes d'un mode de réalisation particulier du procédé selon l'invention.

## 6. Description d'un mode de réalisation de l'invention

### 6.1 Principe général

Le principe général de l'invention repose sur l'utilisation d'un dispositif mobile de l'utilisateur (par exemple son téléphone mobile) pour émettre un message de validation généré et affiché par le terminal transactionnel, permettant à la fois de localiser l'utilisateur via son dispositif mobile, et d'identifier le terminal transactionnel sur lequel est effectuée la transaction. Ainsi, la transaction est validée lorsque l'on peut déterminer que l'utilisateur est bien localisé à proximité du terminal transactionnel en question.

Cette proximité est déterminée d'une part grâce à la localisation du dispositif mobile et d'autre part grâce à une information représentative du terminal transactionnel, contenue dans le code de validation, et à une information de localisation du terminal transactionnel, connue du système de validation.

L'une des caractéristiques principales des réseaux de télécommunication mobiles est qu'un dispositif mobile, quel qu'il soit, est en permanence couvert par une station de base (appelée « BTS » pour « Base Transceiver Station »).

Quand un appareil sort de la zone de couverture d'une station de base, il est transféré à une autre station de base. Ce transfert est effectué afin d'améliorer la qualité du signal.

En d'autres termes, l'opérateur de télécommunication connaît en temps réel la position géographique approximative d'un dispositif mobile dans le réseau de télécommunication mobile : le dispositif mobile se situe dans la zone de couverture de la station de base auquel il est attaché.

Le procédé de l'invention, de façon générale, tire parti de cette localisation. Le procédé de l'invention permet d'une part d'utiliser un dispositif mobile détenu par l'utilisateur comme un vecteur permettant la validation de la transaction via un message de validation comprenant un code de validation et d'autre part comme un moyen de localiser l'utilisateur.

De plus, le procédé de l'invention fonctionne quelque soit le type de dispositif mobile de l'utilisateur ; il n'est pas nécessaire, pour l'utilisateur, de disposer d'un dispositif mobile de dernière génération ou très sophistiqué pour pouvoir profiter des avantages apportés par l'invention.

De même, un terminal transactionnel communique également via un réseau de télécommunication, filaire ou mobile selon le type de terminal transactionnel, permettant ainsi une localisation géographique précise ou approximative par l'opérateur du réseau de télécommunication.

Le procédé de l'invention, de façon générale, tire également parti de cette localisation du terminal transactionnel, pour vérifier si l'utilisateur, localisé via son dispositif mobile, se trouve à proximité du terminal transactionnel, également localisé.

De tels systèmes peuvent être utilisés pour réaliser des paiements simplement, sans qu'il soit nécessaire pour un utilisateur d'utiliser une carte bancaire ou de disposer d'un dispositif mobile particulier.

De tels systèmes peuvent également être utilisés pour contrôler l'accès à un bâtiment, entreprise, zone géographique, spectacle, événement, installation ou moyen de transport dans une grande agglomération, et ainsi référencer un très grand nombre d'utilisateurs.

On considère par la suite, pour illustrer le procédé selon l'invention, un tel système permettant de valider un paiement dans un centre commercial.

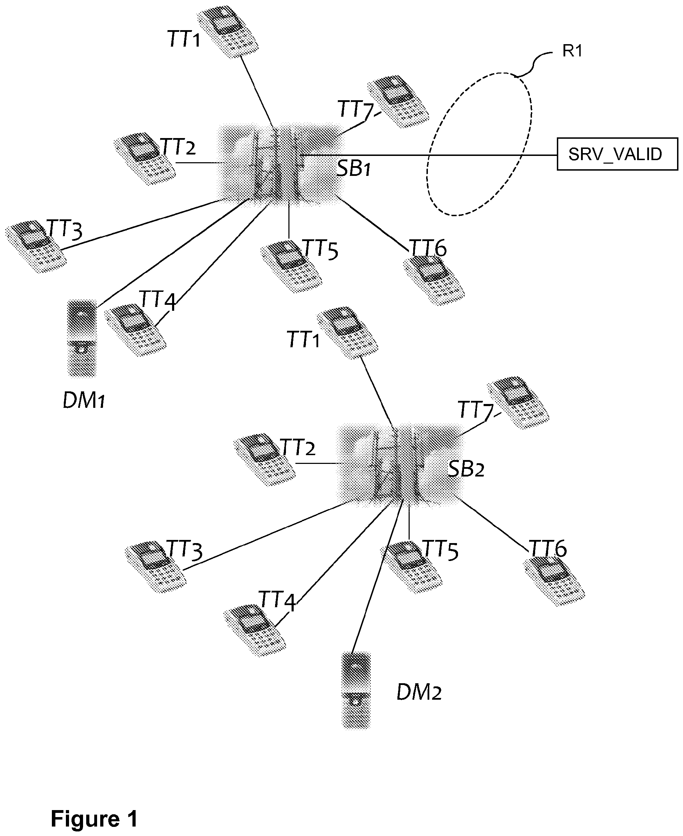

On présente, en relation avec la figure 1, un contexte technique général de mise en oeuvre du procédé de l'invention. Une station de base (SB1) est connectée, par l'intermédiaire d'un réseau de télécommunication (R1), à un serveur de validation (SRV-VALID). La station de base possède une zone de couverture au sein de laquelle des terminaux transactionnels (*TT*1 à *TT*7) et un dispositif mobile (DM1) sont identifiés et connectés.

Le serveur de validation (SRV-VALID) est par exemple situé au sein du réseau de télécommunication géré par l'opérateur de téléphonie de l'utilisateur. Le serveur de validation peut être, dans ce mode de réalisation spécifique de l'invention, le MSC (de l'anglais pour « Mobile services Switching Center ») ou le VLR (de l'anglais pour « Visitor Location Register ») ou le HLR (de l'anglais pour « Home Location Register »).

Selon une alternative, le serveur de validation est situé au sein du terminal transactionnel. Dans ce cas, l'opérateur de téléphonie de l'utilisateur communique avec le terminal transactionnel, pour lui transmettre toutes les informations nécessaires à la validation de la transaction.

Dans le cadre de cet exemple, on considère que l'utilisateur U1, portant le dispositif mobile DM1, souhaite effectuer un achat et régler celui-ci en utilisant le terminal transactionnel *TT*4. Bien évidement, ce système peut être mis en oeuvre dans d'autres cas de figures, comme la validation d'un accès à une zone sécurisée.

Parmi les avantages procurés par l'invention, on trouve les suivants :

- il n'est pas nécessaire de fournir un nouveau matériel à l'utilisateur, qui peut utiliser son dispositif mobile. Cette solution est donc économiquement très intéressante.
- l'invention fonctionne avec absolument n'importe quel téléphone : il n'est pas nécessaire de changer de dispositif mobile pour que le système fonctionne. Le simple fait de disposer d'un dispositif mobile suffit.
- le système est simple pour l'utilisateur, ce qui permet une adoption rapide.
- le système est sûr : pour pouvoir frauder, il est nécessaire d'une part de voler le dispositif mobile de l'utilisateur, et d'autre part de déterminer son code confidentiel. La fraude est donc très peu probable.
- enfin, les opérateurs de télécommunication sont toujours à la recherche de moyens de limiter la volatilité de leurs abonnés (en d'autres termes, à fidéliser les abonnés), le fait d'associer des fonctions de paiement à un dispositif mobile est de nature à affaiblir la volatilité et fidéliser l'abonné.

*6.2 Description d'un mode de réalisation*

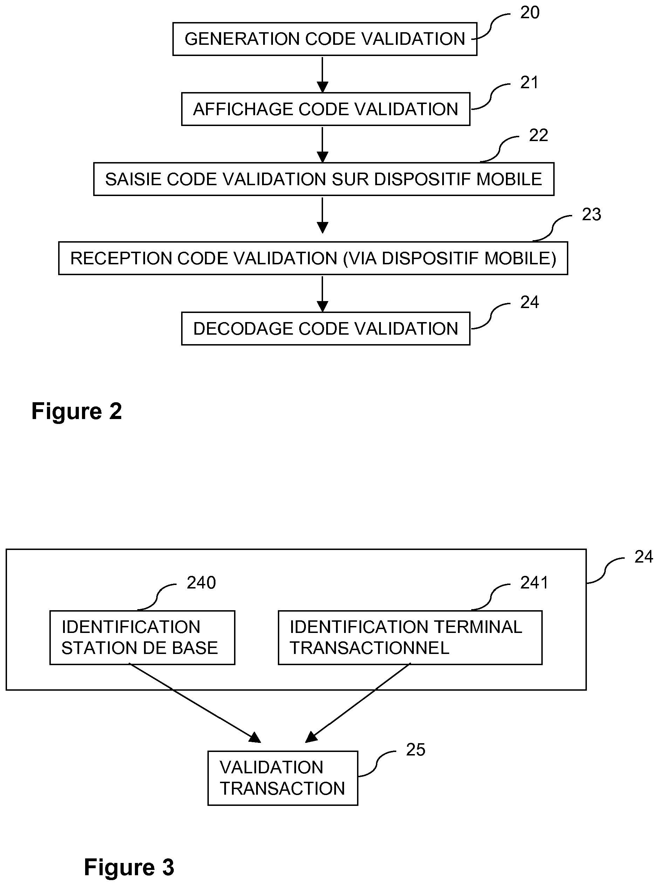

On présente maintenant, en relation avec la figure 2, les principales étapes du procédé de validation d'une transaction selon un mode de réalisation de l'invention, dans lequel le terminal transactionnel est un terminal de paiement permettant de réaliser des achats et le dispositif mobile est un téléphone mobile.

Le procédé comprend une première étape 20 de génération d'un code de validation, par le terminal transactionnel, qui affiche ce code lors d'une étape 21 d'affichage.

Par exemple, l'affichage est effectué sur l'écran du terminal transactionnel lui-même, ou sur un écran relié au terminal transactionnel, comme un écran d'une caisse enregistreuse d'un magasin.

Ce code de validation, correspondant par exemple à une suite de lettre (par exemple « AIYT »), est généré par le terminal transactionnel à partir notamment de son propre identifiant.

Dans l'exemple de la figure 1, un tel identifiant est un chiffre, mais il peut également correspondre à un nombre, attribué par exemple selon le mode de réalisation particulier de l'invention décrit ci-après.

L'utilisateur impliqué dans la transaction doit alors saisir, sur son dispositif mobile (par exemple son téléphone portable), ce code de validation affiché par le terminal transactionnel, lors d'une étape 22 de saisie.

Selon un mode de réalisation particulier de l'invention, l'utilisateur saisit ce code sous la forme d'un message de validation de type SMS, ou MMS, qu'il transmet ensuite à un serveur de validation, par exemple via un numéro court de type « 8000 ».

Ce serveur de validation reçoit ce code, lors d'une étape 23 de réception, et le décode, lors d'une étape 24 de décodage, afin de valider la transaction.

Si le serveur de validation est géré directement par l'opérateur de téléphonie de l'utilisateur, le message de validation transmis par l'utilisateur, via son dispositif mobile, est reçu directement par le serveur de validation.

Si le serveur de validation est géré indépendamment de l'opérateur de téléphonie de l'utilisateur, ce dernier transmet le message de validation au serveur de validation, ainsi que les informations de localisation du dispositif mobile de l'utilisateur. Le serveur de validation est ainsi en relation avec l'opérateur de téléphonie de l'utilisateur.

On présente maintenant, en relation avec la figure 3, les principales étapes du décodage du code de validation et de la décision de validation de la transaction.

Dans un premier temps, lors d'une étape 240 d'identification d'une station de base, le serveur de validation peut associer à l'utilisateur une station de base, par exemple *SB1* en référence à la figure 1, à laquelle celui-ci est connecté. En effet, le message de validation reçu du dispositif mobile de l'utilisateur permet au serveur de validation de localiser l'utilisateur, à partir de la station de base auquel le dispositif mobile est connecté.

De même, à partir de l'identification de cette station de base, le serveur de validation peut identifier les terminaux transactionnels qui sont localisés dans la zone de couverture de cette station de base, et par conséquent proches de l'utilisateur. En effet, le serveur de validation, qu'il soit géré directement par l'opérateur de téléphonie de l'utilisateur, ou qu'il soit indépendant mais en relation avec l'opérateur de téléphonie de l'utilisateur, est apte à connaître chaque station de base du réseau de télécommunication mobile, et par conséquent, lorsque les terminaux transactionnels sont mobiles, le serveur de validation est apte à connaître ceux qui sont connectés à chaque station de base du réseau de télécommunication mobile.

Ainsi, la position géographique du terminal transactionnel s'infère, et de manière automatique, de sa prise en charge par une station de base donnée (ceci suppose que le terminal transactionnel est équipé d'une carte SIM, ce qui est très courant). Ceci est important car une telle mise en oeuvre fait abstraction totale de toute notion de coordonnée géographique. Le fait pour des téléphones mobiles d'être dans le champ d'une station de base couvrant aussi un terminal transactionnel signifie que les téléphones mobiles sont à proximité du terminal transactionnel en question. Ceci suffit au serveur de validation pour identifier le ou les terminaux transactionnels localisés à proximité de l'utilisateur, comme décrit précédemment.

De même, le serveur de validation est apte à connaître les terminaux transactionnels connectés à un réseau filaire et donc, parmi ces derniers, le serveur de validation est apte à connaître ceux qui se trouvent dans la zone de couverture de la station de base identifiée (voir ci-après). Pour ce faire, on peut prévoir que le serveur de validation gère une liste des terminaux transactionnels connectés au réseau filaire et localisés dans les zones de couverture des stations de base.

Ainsi, les terminaux transactionnels potentiellement utilisés pour la transaction à valider sont donc identifiés par le serveur de validation, à partir de la localisation du dispositif mobile de l'utilisateur.

Dans un deuxième temps, le serveur de validation peut identifier précisément le terminal transactionnel, à l'aide du code de validation reçu.

En effet, selon une variante particulière de ce mode de réalisation de l'invention, le code de validation reçu par le serveur de validation correspond à une concaténation de deux éléments, représentatifs respectivement d'un identifiant du terminal transactionnel et de la transaction.

Par exemple, un code de quatre lettres (« AIYT ») se décompose de la façon suivante :

- un nombre $N$ correspond à un identifiant du terminal transactionnel mettant en oeuvre la transaction à valider ;
- un nombre $Q$ représentatif de la transaction ouverte à valider, par exemple un numéro de transaction représentant la une des transactions en attente de complétion effectuées par le terminal transactionnel mettant en oeuvre la transaction à valider. $Q$ est typiquement un petit entier, par exemple un nombre entier dont la valeur oscille entre 0 et 9 car il y a rarement plus de 9 clients face à un terminal transactionnel à un moment donné. Une fois une transaction ayant un $Q$ donné validée, cette valeur de $Q$ est recyclée par le terminal transactionnel pour d'autres transactions.

Selon un aspect particulier de l'invention, les terminaux transactionnels sont identifiés par un identifiant unique $N$, correspondant par exemple au résultat d'une fonction $f$ permettant d'associer un identifiant unique à un terminal transactionnel en fonction de sa localisation $(x, y)$ (voir ci-après pour une méthode d'attribution d'un identifiant à un terminal transactionnel).

Ainsi, comme illustré en figure 1, plusieurs terminaux transactionnels peuvent avoir le même identifiant si l'on considère le réseau de télécommunication dans son ensemble, mais un identifiant unique si l'on considère une zone de couverture d'une station de base.

Avec ce nombre $N$ extrait du code de validation reçu, et l'identification préalable de la station de base, le serveur de validation peut donc identifier de manière unique le terminal transactionnel impliqué dans la transaction à valider, lors d'une étape 241 d'identification du terminal transactionnel.

Ensuite, l'étape 25 de validation de la transaction consiste à vérifier que le numéro $Q$ de la transaction correspond bien à une transaction ouverte (en cours) par le terminal transactionnel identifié préalablement, puis à associer le montant de la transaction à l'utilisateur et à valider la transaction de manière classique (par exemple après vérification du solde du compte de l'utilisateur).

En effet, selon l'invention, le serveur de validation est apte à connaître toutes les transactions effectuées par les terminaux transactionnels localisés dans le réseau de télécommunication, et peut ainsi vérifier que la transaction n° $Q$ est effectivement une transaction ouverte (en cours) par le terminal transactionnel préalablement identifié.

Par exemple, les terminaux transactionnels transmettent au serveur de validation (lorsque celui-ci est directement géré par l'opérateur de téléphonie de l'utilisateur) des informations concernant les transactions effectuées sur chacun d'eux.

Dans un autre cas, les terminaux transactionnels transmettent des informations concernant les transactions effectuées sur chacun d'eux à leur opérateur de téléphonie (ou plus exactement à l'opérateur de téléphonie du commerçant qui les utilise). Si cet opérateur de téléphonie est différent de celui de l'utilisateur, les opérateurs communiquent entre eux pour permettre la validation de la transaction.

Selon un mode de réalisation de l'invention, il est prévu que le terminal transactionnel transmette ces informations vers un opérateur choisi par l'utilisateur. Ainsi, les informations peuvent être directement transmises à l'opérateur de l'utilisateur. Pour ce faire, le procédé selon un mode de réalisation de l'invention comprend une étape d'identification d'un opérateur de communication. Par exemple, le terminal transactionnel offre à l'utilisateur le choix entre divers opérateurs (e.g. « Opérateur #1 : numéro = 1, Opérateur #2 : numéro = 2, ...). L'utilisateur renseigne, ensuite dans le terminal transactionnel, le numéro correspondant à son opérateur, de façon que le terminal transactionnel, et le commerçant, sache à quel serveur de validation les informations concernant les transactions doivent être transmises.

Si cette vérification que le numéro Q de la transaction correspond bien à une transaction ouverte (en cours) par le terminal transactionnel identifié préalablement est positive, le serveur de validation dispose donc des informations suivantes pour valider la transaction :

- la transaction à valider n° $Q$ est en cours de mise en oeuvre sur un terminal transactionnel $TT$x (vérification possible à l'aide du code de validation décodé) ;
- le dispositif mobile $DM$y de l'utilisateur est identifié et localisé ;

- la station de base $STB$z à laquelle est connecté $DM$y est identifiée et localisée ;
- le terminal transactionnel $TT$x est localisé dans la zone de couverture de la station de base $STB$z, à partir du code de validation décodé.

Le serveur de validation peut donc valider la transaction, en effectuant par exemple ensuite les opérations suivantes :

- débit du compte utilisateur du montant de la transaction n° $Q$;
- crédit du compte associé au terminal transactionnel $TT$x ;
- émission d'une validation de transaction vers le terminal transactionnel $TT$x.

En complément, à réception de cette validation de la part du serveur de validation, le terminal transactionnel peut émettre un ticket représentatif de la transaction, à destination de l'utilisateur et ainsi clore la transaction.

Outre le procédé de validation tel que décrit précédemment, l'invention porte également sur un système de validation comprenant des moyens de mise en oeuvre du procédé précédemment décrit.

*6.3 Autres modes de réalisation et caractéristiques complémentaires*

*6.3.1. Saisie du code confidentiel*

Selon une caractéristique particulière de l'invention, une étape supplémentaire de saisie, sur le terminal transactionnel, d'un code confidentiel est effectuée par l'utilisateur. Cette saisie est une mesure de sécurité supplémentaire qui permet de s'assurer que l'utilisateur dispose bien de cette information.

Le code confidentiel saisi par l'utilisateur sur le terminal transactionnel est ensuite transmis par le terminal transactionnel au serveur de validation, ou à l'opérateur de téléphonie de l'utilisateur, lui-même en relation avec le serveur de validation. Dans ce cas, le terminal transactionnel doit connaître l'opérateur de téléphonie en question.

Pour ce faire, le procédé selon un mode de réalisation de l'invention comprend une étape d'identification d'un opérateur de communication, comme décrit précédemment. Par exemple, le terminal transactionnel offre à l'utilisateur le choix entre divers opérateurs (e.g. « Opérateur #1 : numéro = 1, Opérateur #2 : numéro = 2, ...). L'utilisateur renseigne ensuite dans le terminal transactionnel le numéro correspondant à son opérateur, de façon que le terminal transactionnel, et le commerçant, sache à quel serveur de validation le code confidentiel saisi par l'utilisateur doit être transmis.

Il est envisagé, par exemple, de rendre cette saisie d'un code confidentiel obligatoire uniquement si la transaction excède un certain montant, paramétrable en fonction de l'utilisateur, par exemple lors d'une phase préalable d'enregistrement auprès du serveur de validation.

Une mesure de sécurité supplémentaire peut être obtenue en verrouillant, de manière classique, le dispositif mobile de l'utilisateur, après une certaine période d'inactivité.

Une autre mesure de sécurité peut consister à rendre obligatoire la saisie d'un code confidentiel pour autoriser l'envoi du message de validation (contenant le code de validation) vers le serveur de validation ou encore à inclure un code confidentiel dans le corps du message de validation. Ainsi, si le dispositif mobile de l'utilisateur lui est subtilisé par une personne malveillante, celle-ci ne pourra pas utiliser le dispositif mobile pour valider une transaction si elle ne connaît pas le code confidentiel à insérer dans le message de validation.

*6.3.2 Attribution d'un identifiant à un terminal transactionnel*

Selon une caractéristique particulière de l'invention, l'identifiant unique attribué à chaque terminal transactionnel localisé dans une zone de couverture d'une station de base est déterminé en tenant compte de la localisation du terminal transactionnel, c'est-à-dire de sa position $(x,y)$.

On considère donc une fonction $f(x,y)$, délivrant un numéro unique à un terminal transactionnel, en fonction de sa localisation, telle que : $f = a \times v + u$.

Par construction, la fonction $f(x,y)$ délivre un entier compris entre 0 et $n$-1, $n$ représentant le nombre d'identifiants différents que l'on peut affecter aux terminaux transactionnels à considérer.

On considère également :

- deux entiers $a$ et $b$, tels que $b \geq a$, et $n = a \times b$ ;
- $w = E[x/a] \bmod 2$ ;
- $u = x \bmod a$ ;
- $v = (y + w \times E[b/2]) \bmod b$, avec $E[.]$ la partie entière.

La fonction $f(x,y)$ étant périodique, la distance minimale $d$ entre deux points ayant la même valeur de $f$, c'est-à-dire deux terminaux transactionnels localisés à deux endroits différents, s'obtient soit par un décalage de « $b$ pas » verticalement (selon $y$), soit par un décalage de « $a$ pas de marche» horizontalement (selon x) et « b/2 pas de marche » verticalement (selon $y$).

Par exemple, on peut écrire:

$$d = \mathrm{Min}\ (b, \sqrt{a^2 + \frac{b^2}{4}}),$$ que l'on peut optimiser par un rapport $a/b$ voisin de $\dfrac{\sqrt{3}}{2}$.

A titre d'exemple, si l'on souhaite affecter aux terminaux transactionnels des nombres à quatre chiffres (pour le confort des utilisateurs finaux), il convient de choisir $a$=93 et $b$=107, ce qui donne $n$=9951 et une distance entre deux terminaux transactionnels de même identifiant de 107 pas de marche.

De cette méthode qui affecte des valeurs à tous les points du plan infini, on peut facilement s'adapter à une cartographie finie. En effet, la construction étant périodique, n'importe quel point d'origine convient et permet de conserver la distance de 107 pas entre deux terminaux transactionnels de même identifiant.

*6.3.3 Caractéristiques complémentaires*

Selon un mode de réalisation particulier de l'invention, lorsque l'utilisateur est un abonné d'un opérateur étranger (OE) ayant un accord d'itinérance (« roaming agreement ») avec un opérateur national (ON), la mise en oeuvre de l'invention est quasiment identique. En effet, la présence d'un abonné étranger dans la zone de couverture de la station de base d'un ON est une information connue de l'ON. Ainsi, la localisation du dispositif mobile de l'utilisateur, ainsi que l'identification du terminal transactionnel peuvent se faire de la manière décrite ci-dessus. Seules les étapes concernant la validation proprement dite de la transaction, pour ce qui concerne par exemple la vérification du solde du compte de l'utilisateur, peuvent nécessiter par exemple des échanges avec un serveur étranger en charge de la gestion du compte de l'utilisateur.

**Revendications**

**1.** Procédé de validation d'une transaction sur un terminal transactionnel, ladite transaction étant associée à un utilisateur, comprenant une étape de décodage (24) d'un code de validation préalablement généré (20) et affiché (21) par ledit terminal transactionnel selon la revendication 13, saisi (22) par ledit utilisateur au sein d'un message de validation, transmis par un dispositif mobile dudit utilisateur à une entité d'un réseau de télécommunication auquel ledit dispositif mobile et ledit terminal transactionnel sont connectés, **caractérise en ce que** ladite étape de décodage (24) dudit code de validation délivre au moins une information représentative d'un identifiant dudit terminal transactionnel, ledit identifiant dudit terminal transactionnel correspondant au résultat d'une fonction $f(x,y)$ permettant d'associer un identifiant unique à un terminal transactionnel en fonction de sa localisation (x, y) dans une zone de couverture d'une station de base.

**2.** Procédé de validation selon la revendication 1, **caractérisé en ce qu'**il comprend les étapes de :

- Réception (23) d'un code de validation préalablement généré et affiché par ledit terminal transactionnel, saisi par ledit utilisateur au sein d'un message de validation transmis par un dispositif mobile dudit utilisateur à une entité d'un réseau de télécommunication auquel ledit dispositif mobile et ledit terminal transactionnel sont connectés ;

• Identification (240) d'une station de base d'un réseau de télécommunication mobile à laquelle est connecté ledit dispositif mobile dudit utilisateur ;

• validation (25) de ladite transaction lorsque ledit terminal transactionnel identifié se trouve dans la zone de couverture de ladite station de base identifiée à laquelle est connecté ledit dispositif mobile dudit utilisateur.

**3.** Procédé de validation selon la revendication 1, **caractérisé en ce que** ledit message de validation est de type SMS ou MMS.

**4.** Procédé de validation selon l'une quelconque des revendications 1 à 3, **caractérisé en ce que** ladite étape de décodage délivre en outre une information représentative de ladite transaction.

**5.** Procédé de validation selon l'une quelconque des revendications 1 à 4, **caractérisé en ce que** ladite fonction s'écrit de la manière suivante : $f(x,y) = a \times v + u$, avec :

     • $a$ et $b$ deux entiers, tels que $b \geq a$, et $n = a \times b$, où $n$ représente le nombre de d'identifiants différents à affecter aux terminaux transactionnels ;
     • $w = E[x/a] \bmod 2$ ;
     • $u = x \bmod a$ ;
     • $v = (y + w \times E[b/2]) \bmod b$, avec E[.] la partie entière, et

$$\cdot \quad d = \mathrm{Min}\left(b, \sqrt{a^2 + \frac{b^2}{4}}\right) \text{ la distance mi-}$$

nimale entre deux terminaux transactionnels distincts.

**6.** Procédé de validation selon l'une quelconque des revendications 1 à 5, **caractérisé en ce qu'**il comprend en outre une étape de réception d'un code confidentiel, préalablement saisi par ledit utilisateur sur ledit terminal transactionnel, et transmis par ledit terminal transactionnel concomitamment à la transmission dudit code de validation par ledit dispositif mobile dudit utilisateur.

**7.** Procédé de validation selon l'une quelconque des revendications 1 à 6, **caractérisé en ce que** ledit message de validation comprend un code confidentiel.

**8.** Procédé de validation selon l'une quelconque des revendications 1 à 7, **caractérisé en ce que** ledit procédé comprend en outre une étape de sélection d'un opérateur téléphonique auprès duquel le dispositif mobile dudit utilisateur est enregistré.

**9.** Procédé de validation selon l'une quelconque des revendications 1 à 8, **caractérisé en ce que** ledit terminal transactionnel est un terminal de paiement mobile connecté audit réseau de télécommunication.

**10.** Procédé de validation selon la revendication 2, **caractérisé en ce que** ledit terminal transactionnel est connecté à ladite station de base.

**11.** Procédé de validation selon l'une quelconque des revendications 1 à 10, **caractérisé en ce qu'**il comprend en outre une étape de transmission par ladite entité du réseau de télécommunication, audit terminal transactionnel, dudit code de validation et **en ce que** ladite étape de décodage dudit code de validation est mise en oeuvre au sein dudit terminal transactionnel.

**12.** Système de validation d'une transaction sur un terminal transactionnel, ladite transaction étant associée à un utilisateur, comprenant des moyens de décodage d'un code de validation préalablement généré et affiché par ledit terminal transactionnel, saisi par ledit utilisateur au sein d'un message de validation transmis par un dispositif mobile dudit utilisateur à une entité d'un réseau de télécommunication auquel ledit dispositif mobile et ledit terminal transactionnel sont connectés, lesdits moyens de décodage dudit code de validation délivrant au moins une information représentative d'un identifiant dudit terminal transactionnel, **caractérisé en ce que** ledit identifiant dudit terminal transactionnel correspond au résultat d'une fonction $f(x,y)$ permettant d'associer un identifiant unique à un terminal transactionnel en fonction de sa localisation (x, y) dans une zone de couverture d'une station de base.

**13.** Terminal transactionnel comprenant des moyens de génération d'un code de validation, à partir d'au moins une information représentative d'un identifiant dudit terminal transactionnel, et des moyens d'affichage dudit code de validation généré sur un dispositif d'affichage dudit terminal transactionnel, **caractérisé en ce que** ledit identifiant dudit terminal transactionnel correspond au résultat d'une fonction $f(x, y)$ permettant d'associer un identifiant unique à un terminal transactionnel en fonction de sa localisation (x, y) dans une zone de couverture d'une station de base.

**14.** Produit programme d'ordinateur téléchargeable depuis un réseau de communication et/ou enregistré sur un support lisible par ordinateur et/ou exécutable par un processeur, **caractérisé en ce qu'**il comprend des instructions de code de programme pour la mise en oeuvre du procédé de validation d'une transaction selon l'une au moins des revendications 1 à 11.

**Patentansprüche**

**1.** Verfahren zum Validieren einer Transaktion auf einem Transaktionsterminal, wobei die Transaktion einem Benutzer zugeordnet wird, umfassend einen Schritt des Decodierens (24) eines Validierungscodes, der zuvor erzeugt (20) und durch das Transaktionsterminal gemäß Anspruch 13 angezeigt (21) wird, der durch den Benutzer in eine Validierungsnachricht eingegeben wird, die von einem Mobilgerät des Benutzers an eine Einheit eines Telekommunikationsnetzes übertragen wird, mit dem das Mobilgerät und das Transaktionsterminal verbunden sind, **dadurch gekennzeichnet, dass** der Schritt des Decodierens (24) des Validierungscodes mindestens eine Information abgibt, die für eine Kennung des Transaktionsterminals repräsentativ ist, wobei die Kennung des Transaktionsterminals dem Ergebnis einer Funktion $f(x, y)$ entspricht, die es ermöglicht, einem Transaktionsterminal in Abhängigkeit von seiner Lokalisierung (x, y) in einem Abdeckungsbereich einer Basisstation eine eindeutige Kennung zuzuordnen.

**2.** Verfahren zum Validieren nach Anspruch 1, **dadurch gekennzeichnet, dass** es die folgenden Schritte aufweist:

• Empfangen (23) eines Validierungscodes, der zuvor erzeugt und durch das Transaktionsterminal angezeigt wird, der durch den Benutzer in eine Validierungsnachricht eingegeben wird, die von einem Mobilgerät des Benutzers an eine Einheit eines Telekommunikationsnetzes übertragen wird, mit dem das Mobilgerät und das Transaktionsterminal verbunden sind,
• Identifizieren (240) einer Basisstation eines Telekommunikationsnetzes, an das das Mobilgerät des Benutzers angeschlossen ist,
• Validieren (25) der Transaktion, wenn sich das identifizierte Transaktionsterminal in dem Abdeckungsbereich der identifizieren Basisstation befindet, an die das Mobilgerät des Benutzers angeschlossen ist.

**3.** Verfahren zum Validieren nach Anspruch 1, **dadurch gekennzeichnet, dass** die Validierungsnachricht vom Typ der SMS- oder MMS-Nachricht ist.

**4.** Verfahren zum Validieren nach einem der Ansprüche 1 bis 3, **dadurch gekennzeichnet, dass** der Schritt des Decodierens ferner eine Information abgibt, die für die Transaktion repräsentativ ist.

**5.** Verfahren zum Validieren nach einem der Ansprüche 1 bis 4, **dadurch gekennzeichnet, dass** die Funktion wie folgt geschrieben wird: $f(x,y) = a \times v + u$, wobei:

• $a$ und $b$ zwei ganze Zahlen sind, derart, dass $b \geq a$ und $n = a \times b$, wobei $n$ die Anzahl von verschiedenen Kennungen ist, die den Transaktionsterminalen zuzuordnen sind,
• $w = E[x/a] \bmod 2$,
• $u = x \bmod a$,
• v = (y+wxE[b/2]) mod b, wobei E[.] der ganzzahlige Anteil ist und

• $d = \mathrm{Min}\ (b,\ \sqrt{a^2 + \dfrac{b^2}{4}}\ )$ der Mindestab-

stand zwischen zwei verschiedenen Transaktionsterminalen ist.

**6.** Verfahren zum Validieren nach einem der Ansprüche 1 bis 5, **dadurch gekennzeichnet, dass** es ferner einen Schritt des Empfangens eines vertraulichen Codes aufweist, der zuvor von dem Benutzer an dem Transaktionsterminal eingegeben und von dem Transaktionsterminal zusammen mit der Übertragung des Validierungscodes durch das Mobilgerät des Benutzers übertragen worden ist.

**7.** Verfahren zum Validieren nach einem der Ansprüche 1 bis 6, **dadurch gekennzeichnet, dass** die Validierungsnachricht einen vertraulichen Code aufweist.

**8.** Verfahren zum Validieren nach einem der Ansprüche 1 bis 7, **dadurch gekennzeichnet, dass** das Verfahren ferner einen Schritt des Auswählens eines Telefonanbieters aufweist, bei dem das Mobilgerät des Benutzers registriert ist.

**9.** Verfahren zum Validieren nach einem der Ansprüche 1 bis 8, **dadurch gekennzeichnet, dass** das Transaktionsterminal ein mobiles Bezahlterminal ist, das an das Telekommunikationsnetz angeschlossen ist.

**10.** Verfahren zum Validieren nach Anspruch 2, **dadurch gekennzeichnet, dass** das Transaktionsterminal an die Basisstation angeschlossen wird.

**11.** Verfahren zum Validieren nach einem der Ansprüche 1 bis 10, **dadurch gekennzeichnet, dass** es ferner einen Schritt des Übertragens durch die Einheit des Telekommunikationsnetzes an das Transaktionsterminal des Validierungscodes aufweist und dadurch, dass der Schritt des Decodierens des Validierungscodes in dem Transaktionsterminal durchgeführt wird.

**12.** System zum Validieren einer Transaktion auf einem Transaktionsterminal, wobei die Transaktion einem Benutzer zugeordnet ist, umfassend Mittel zum Decodieren eines Validierungscodes, der zuvor erzeugt und durch das Transaktionsterminal angezeigt wird, der durch den Benutzer in eine Validierungsnachricht eingegeben ist, die von einem Mobilgerät des Benutzers an eine Einheit eines Telekommunikationsnetzes übertragen ist, mit dem das Mobilgerät und das Transaktionsterminal verbunden sind, wodurch mindestens eine Information abgegeben wird, die für eine Kennung des Transaktionsterminals repräsentativ ist, **dadurch gekennzeichnet, dass** die Kennung des Transaktionsterminals dem Ergebnis einer Funktion *f (x, y)* entspricht, die es ermöglicht, einem Transaktionsterminal in Abhängigkeit von seiner Lokalisierung (x, y) in einem Abdeckungsbereich einer Basisstation eine eindeutige Kennung zuzuordnen.

**13.** Transaktionsterminal, umfassend Mittel zum Erzeugen eines Validierungscodes ausgehend von mindestens einer Information, die für eine Kennung des Transaktionsterminals repräsentativ ist, und Mittel zum Anzeigen des Validierungscodes, der auf dem Mittel zum Anzeigen des Transaktionsterminals erzeugt ist, **dadurch gekennzeichnet, dass** die Kennung des Transaktionsterminals dem Ergebnis einer Funktion *f (x, y)* entspricht, die es ermöglicht, einem Transaktionsterminal in Abhängigkeit von seiner Lokalisierung (x, y) in einem Abdeckungsbereich einer Basisstation eine eindeutige Kennung zuzuordnen.

**14.** Computerprogrammprodukt, das von einem Kommunikationsnetz heruntergeladen werden kann und/oder auf einem computerlesbaren Medium gespeichert ist und/oder von einem Prozessor ausgeführt werden kann, **dadurch gekennzeichnet, dass** es Programmcodeanweisungen für das Umsetzen eines Validierungsverfahrens einer Transaktion nach einem der Ansprüche 1 bis 11 aufweist.

## Claims

**1.** Method for validating a transaction on a transactional terminal, said transaction being associated with a user, comprising a step for decoding (24) a validation code preliminarily generated (20) and displayed (21) by said transactional terminal according to claim 13, entered (22) by said user in a validation message, transmitted by a mobile device of said user to an entity of a telecommunications network to which said mobile device and said transactional terminal are connected,
**characterized in that** said step for decoding (24) said validation code delivers at least one piece of information representing an identifier of said transactional terminal, said identifier of the transactional terminal corresponding to the result of a function *f(x, y)* enabling a unique identifier to be associated with a transactional terminal as a function of its localization (*x,y*) in a zone of coverage of a base station.

**2.** Method for validating according to claim 1, **characterized in that** it comprises steps for:

• receiving (23) a validation code preliminarily generated and displayed by said transactional terminal, entered by the user into a validation message transmitted by a mobile device of said user to an entity of a telecommunications network to which said mobile device and said transactional terminal are connected;
• identifying (240) a base station of a mobile telecommunications network to which said mobile device of said user is connected;
• validating (25) said transaction when said identified transactional terminal is in the zone of coverage of said identified base station to which said mobile device of said user is connected.

**3.** Method for validating according to claim 1, **characterized in that** said validation message is of the SMS or MMS type.

**4.** Method for validating according to any one of the claims 1 to 3, **characterized in that** said decoding step also delivers a piece of information representing said transaction.

**5.** Method for validating according to any of the claims 1 to 4, **characterized in that** said function can be written as follows: *f(x,y)* = a×v + u, with:

• *a* and *b* being two integers such that $b \geq a$, and $n = a \times b$, where *n* represents the number of different identifiers to be allotted to the transactional terminal;
• *w* = E[*x/a*] mod 2 ;
• *u* = *x* mod *a* ;
• *v* = (*y*+*w*×E[*b*/2]) mod *b*, with E[.] being the integer part; and

• $d = \mathrm{Min}\ (b,\ \sqrt{a^2 + \dfrac{b^2}{4}}\ )$ the minimal distance between two distinct transactional terminals.

6. Method for validating according to any of the claims 1 to 5, **characterized in that** it also comprises a step for receiving a confidential code, preliminarily entered by said user into said transactional terminal and transmitted by said transactional terminal concomitantly with the transmission of said validation code by said mobile device of said user.

7. Method for validating according to any of the claims 1 to 6, **characterized in that** said validation message includes a confidential code.

8. Method for validating according to any of the claims 1 to 7, **characterized in that** it also includes a step for selecting a telephone operator with which the mobile device of said user is registered.

9. Method for validating according to any of the claims 1 to 8, **characterized in that** said transactional terminal is a mobile payment terminal connected to said telecommunications network.

10. Method for validating according to claim 2, **characterized in that** said transaction terminal is connected to said base station.

11. Method for validating according to any of the claims 1 to 10, **characterized in that** it also comprises a step for the transmission of said validation code by said entity of the telecommunications network to said transactional terminal, and **in that** said step for decoding said validation code is implemented within said transactional terminal.

12. System for validating a transaction on a transactional terminal, said transaction being associated with a user comprising means for decoding a validation code preliminarily generated and displayed by said transactional terminal, entered by said user into a validation message transmitted by a mobile device of said user to an entity of a telecommunications network to which said mobile device and said transactional terminal are connected, said means for decoding said validation code delivering at least one piece of information representing an identifier of said transactional terminal, **characterized in that** said identifier of the transactional terminal corresponds to the result of a function $f(x,y)$ enabling a unique identifier to be associated with a transactional terminal as a function of its localization $(x,y)$ in a zone of coverage of a base station.

13. Transactional terminal comprising means for generating a validation code on the basis of at least one piece of information representing an identifier of said transactional terminal and means for displaying said validation code generated on a display device of said transactional terminal, **characterized in that** said identifier of the transactional terminal corresponds to the result of a function $f(x,y)$ enabling a unique identifier to be associated with a transactional terminal as a function of its localization $(x,y)$ in a zone of coverage of a base station.

14. Computer program product downloadable from a communications network and/or recorded on a computer-readable carrier and/or executable by a processor, **characterized in that** it comprises program code instructions to implement the method for validating a transaction according to at least one of the claims 1 to 11.

**Figure 1**

GENERATION CODE VALIDATION — 20

↓

AFFICHAGE CODE VALIDATION — 21

↓

SAISIE CODE VALIDATION SUR DISPOSITIF MOBILE — 22

↓

RECEPTION CODE VALIDATION (VIA DISPOSITIF MOBILE) — 23

↓

DECODAGE CODE VALIDATION — 24

## Figure 2

— 24

IDENTIFICATION STATION DE BASE — 240

IDENTIFICATION TERMINAL TRANSACTIONNEL — 241

VALIDATION TRANSACTION — 25

## Figure 3

**EP 2 369 780 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1696626 A1